# EUROPEAN PATENT SPECIFICATION

(11) **EP 2 720 421 B1**
(45) Date of publication and mention of the grant of the patent: **08.06.2016**
(21) Application number: 13179659.1
(22) Date of filing: 08.08.2013
(51) Int. Cl.: H04L 12/825

(54) **Method for processing congestion and network device**
Verfahren zur Verarbeitung von Überlastung und Netzwerkvorrichtung
Procédé de traitement d'un encombrement et dispositif de réseau

(30) Priority: 10.10.2012 CN 201210381325
(43) Date of publication of application: 16.04.2014
(73) Proprietor: Huawei Technologies Co., Ltd., Longgang District Shenzhen, Guangdong 518129 (CN)
(72) Inventor: Zhang, Lei, 518129 Shenzhen (CN)
(74) Representative: Pfenning, Meinig & Partner mbB

(56) References cited:
- WO-A1-2007/073271
- WO-A2-2007/120710
- US-A1- 2010 061 238

## Description

### TECHNICAL FIELD

The present invention relates to communications technologies, and in particular, to a method for processing congestion and a network device.

### BACKGROUND

In a network transmission process of the Ethernet, when multiple ingress ports of a network device send data packets to an egress port simultaneously, the egress port may suffer congestion. When detecting the congestion, the network device may sample a data packet from data packets causing the congestion, that is, data packets in a buffer queue of the network device, construct a congestion notification (Congestion Notification in English, CN for short) packet according to a medium access control (Medium Access Control in English, MAC for short) address of a congestion source device included in the sampled data packets, and send the congestion notification packet to the congestion source device. The congestion source device is the device which generates the sampled data packet. When receiving the congestion notification packet, the congestion source device stops sending data packets according to the congestion notification packet, so that the congestion is essentially resolved.

However, in some Ethernet networking architectures, such as networking architecture using the Fiber Channel Over Ethernet (Fiber Channel Over Ethernet in English, FCoE for short) protocol or the Transparent Interconnection of Lots of Link (Transparent Interconnection of Lots of Link in English, TRILL for short) protocol, in a process of forwarding a data packet, after the data packet is forwarded by a network device at each hop, a source MAC address of the data packet is changed to a MAC address of the network device at this hop, and a destination MAC address of the data packet is changed to a MAC address of a next-hop network device. In this scenario, the congestion notification packet generated by a network device can only reach a network device at a preceding hop of the network device, and cannot reach the congestion source device, thereby reducing reliability of congestion processing.

US 2010/0061238 A1 discloses a method comprising: receiving at a receive side of a physical link a request to suspend transmission of data from a queue within a transmit side of a first stage of queues and to suspend transmission via a path including the physical link, a portion of the first stage of queues, and a portion of a second stage of queues. The method includes sending, in response to the request, a flow control signal to a flow control module configured to schedule transmission of the data from the queue within the transmit side of the first stage of queues. The flow control signal is associated with a first control loop including the path and differing from a second control loop that excludes the first stage of queues.

### SUMMARY

The present invention provides a method for processing congestion and a network device to improve reliability of congestion processing.

A first aspect of the present invention provides a method for processing congestion, the method is applied in a network scenario where a source MAC address and a destination MAC address in a packet header of a data packet are changed at each hop, and includes:
when a first network device detects congestion, acquiring, by the first network device, a data packet from a buffer queue of the first network device, where the data packet is sent by a congestion source device and includes a network address of the congestion source device;
generating, by the first network device, a congestion notification packet according to the network address of the congestion source device, where the congestion notification packet includes the network address of the congestion source device; and
sending, by the first network device, the congestion notification packet to a second network device, so that the second network device sends the congestion notification packet according to the network address of the congestion source device; wherein the second network device is a previous-hop network device of the first network device.

In a first possible implementation of the first aspect, the first network device and the second network device are layer 2 network devices running the FCoE protocol; the network address of the congestion source device is an FCID of the congestion source device; a source FCID of the congestion notification packet is the FCID of the first network device, and a destination FCID of the congestion notification packet is the FCID of the congestion source device.

In a second possible implementation of the first aspect, the first network device and the second network device are layer 2 network devices running the TRILL protocol; the data packet is a TRILL data packet; and the network address of the congestion source device comprises at least one of an inner source IP address included in the TRILL data packet and an inner source MAC address included in the TRILL data packet.

In a third possible implementation of the first aspect, the first network device and the second network device are layer 3 network devices; and the network address of the congestion source device is an IP address of the congestion source device.

A second aspect of the present invention provides a congestion processing method, the method is applied in a network scenario where a source MAC address and a destination MAC address in a packet header of a data packet are changed at each hop, and includes:
receiving, by a second network device, a congestion notification packet from a first network device, where the congestion notification packet includes a network address of a congestion source device and is generated by the first network device according to the network address of the congestion source device, the network address of the congestion source device is included in a data packet sent by the congestion source device, and the data packet is acquired from a buffer queue of the first network device when the first network device detects congestion; and
sending, by the second network device, the congestion notification packet according to the network address of the congestion source device; wherein the second network device is a previous-hop network device of the first network device.

In a first possible implementation of the second aspect, the first network device and the second network device are layer 2 network devices running the FCoE protocol; the network address of the congestion source device is an FCID of the congestion source device; a source FCID of the congestion notification packet is the FCID of the first network device, and a destination FCID of the congestion notification packet is the FCID of the congestion source device.

In a second possible implementation of the second aspect, the first network device and the second network device are layer 2 network devices running the TRILL protocol; the data packet is a TRILL data packet; and the network address of the congestion source device comprises at least one of an inner source IP address included in the TRILL data packet and an inner source MAC address included in the TRILL data packet.

In a third possible implementation of the second aspect, the first network device and the second network device are layer 3 network devices; and the network address of the congestion source device is an IP address of the congestion source device.

A third aspect of the present invention provides a network device, the network device is configured to change a source MAC address and a destination MAC address in a packet header of a data packet when transferring the data packet, and includes an acquiring unit, a generating unit and a sending unit, wherein:
the acquiring unit, configured to acquire, when a network device detects congestion, a data packet from a buffer queue of the network device, and transmit the data packet to the generating unit, where the data packet is sent by a congestion source device and includes a network address of the congestion source device;
the generating unit, configured to generate a congestion notification packet according to the network address of the congestion source device, and transmit the congestion notification packet to the sending unit, where the congestion notification packet includes the network address of the congestion source device; and
the sending unit, configured to send the congestion notification packet to another network device, so that the another network device sends the congestion notification packet according to the network address of the congestion source device; wherein the another network device is a previous-hop network device of the network device.

In a first possible implementation of the third aspect, the network device and the second network device are layer 2 network devices running the FCoE protocol; the network address of the congestion source device is an FCID of the congestion source device; a source FCID of the congestion notification packet is the FCID of the network device, and a destination FCID of the congestion notification packet is the FCID of the congestion source device.

In a second possible implementation of the third aspect, the network device and the second network device are layer 2 network devices running the TRILL protocol; the data packet is a TRILL data packet; and the network address of the congestion source device comprises at least one of an inner source IP address included in the TRILL data packet and an inner source MAC address included in the TRILL data packet.

In a third possible implementation of the third aspect, the network device and the another network device are layer 3 network devices; and the network address of the congestion source device is an IP address of the congestion source device.

A fourth aspect of the present invention provides a network device, the network device is configured to change a source MAC address and a destination MAC address in a packet header of a data packet when transferring the data packet, and includes a receiving unit and a sending unit, wherein:
the receiving unit, configured to receive a congestion notification packet from another network device and transmit the congestion notification packet to the sending unit, where the congestion notification packet includes a network address of a congestion source device and is generated by the another network device according to the network address of the congestion source device, the network address of the congestion source device is included in a data packet sent by the congestion source device, and the data packet is acquired from a buffer queue of the another network device when the another network device detects congestion; wherein the network device is a previous-hop network device of the another network device; and
the sending unit, configured to send the congestion notification packet according to the network address of the congestion source device.

In a first possible implementation of the fourth aspect, the another network device and the network device are layer 2 network devices running the FCoE protocol; the network address of the congestion source device is an FCID of the congestion source device; a source FCID of the congestion notification packet is the FCID of the another network device, and a destination FCID of the congestion notification packet is the FCID of the congestion source device.

In a second possible implementation of the fourth aspect, the first network device and the network device are layer 2 network devices running the TRILL protocol; the data packet is a TRILL data packet; and the network address of the congestion source device comprises at least one of an inner source IP address included in the TRILL data packet and an inner source MAC address included in the TRILL data packet.

In a third possible implementation of the fourth aspect, the first network device and the network device are layer 3 network devices; and the network address of the congestion source device is an IP address of the congestion source device.

According to the foregoing technical solutions, in embodiments of the present invention, when a first network device detects congestion, the first network device acquires a data packet from a buffer queue of the first network device, where the data packet is sent by a congestion source device and includes a network address of the congestion source device; then the first network device generates a congestion notification packet according to the network address of the congestion source device, where the congestion notification packet includes the network address of the congestion source device; and the first network device sends the congestion notification packet to a second network device, so that the second network device sends the congestion notification packet according to the network address of the congestion source device. In this way, the congestion notification packet reaches the congestion source device, thereby improving reliability of congestion processing.

### BRIEF DESCRIPTION OF DRAWINGS

To illustrate the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG 1 is schematic flowchart of a method for processing congestion according to an embodiment of the present invention;
FIG 2 is a networking architecture of an Ethernet formed by layer 2 network devices running the FCoE protocol;
FIG 3 is schematic flowchart of a method for processing congestion according to another embodiment of the present invention;
FIG 4 is a schematic structural diagram of a network device according to another embodiment of the present invention;
FIG 5 is a schematic structural diagram of a network device according to another embodiment of the present invention;
FIG 6 is a schematic structural diagram of a network device according to another embodiment of the present invention; and
FIG 7 is a schematic structural diagram of a network device according to another embodiment of the present invention.

### DESCRIPTION OF EMBODIMENTS

To make the objectives, technical solutions, and advantages of the embodiments of the present invention more comprehensible, the following clearly describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

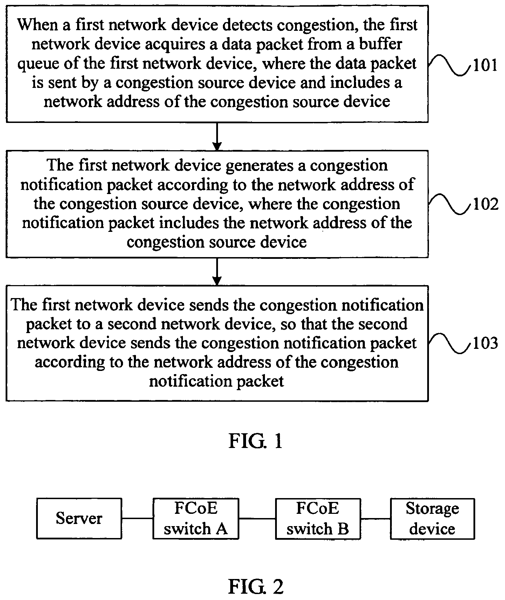

FIG 1 is a schematic flowchart of a method for processing congestion according to an embodiment of the present invention. The method is applied in a network scenario where a source MAC address and a destination MAC address in a packet header of a data packet are changed at each hop. As shown in FIG 1, the method includes the following steps:
101. When a first network device detects congestion, the first network device acquires a data packet from a buffer queue of the first network device, where the data packet is sent by a congestion source device and includes a network address of the congestion source device.
   Specifically, when the first network device detects congestion, the first network device selects a data packet from a buffer queue of the first network device according to certain rules, and confirms that the selected data packet is a data packet sent by the congestion source device, where the congestion source device is a device sending the data packet.
102. The first network device generates a congestion notification packet according to the network address of the congestion source device, where the congestion notification packet includes the network address of the congestion source device.
103. The first network device sends the congestion notification packet to a second network device, so that the second network device sends the congestion notification packet according to the network address of the congestion source device. Specifically, the first network device and the second network device may include but are not limited to layer 2 network devices running the FCoE protocol, layer 2 network devices running the TRILL protocol, or layer 3 network devices.

Alternatively, in a possible implementation of this embodiment, the first network device may query routing information stored on the first network device to determine a previous-hop network device, that is, the second network device, and obtain a route entry of the previous-hop network device, so that the first network device can send the congestion notification packet to the second network device according to the route entry.

Alternatively, in a possible implementation of this embodiment, if the first network device and the second network device are layer 2 network devices running the FCoE protocol, accordingly the network address of the congestion source device may be a fiber channel ID (Fiber Channel ID in English, FCID for short) of the congestion source device, that is, a source FCID included in an FCoE data packet. The FCID of the congestion source device is included in an FCoE data packet sent by the congestion source device and is used as a source FCID; and the source FCID is not modified in a process of forwarding the FCoE data packet.

Alternatively, in a possible implementation of this embodiment, if the first network device and the second network device are layer 2 network devices running the TRILL protocol, accordingly the network address of the congestion source device may be at least one of an inner source IP address included in a TRILL data packet and an inner source MAC address included in the TRILL data packet, where the inner source IP address of the TRILL data packet is an IP address of the congestion source device and the inner source MAC address of the TRILL data packet is a MAC address of the congestion source device.

Alternatively, in a possible implementation of this embodiment, if the first network device and the second network device are layer 3 network devices, accordingly the network address of the congestion source device may be an IP address of the congestion source device, that is, a source IP address included in an Ethernet data packet.

To make the method provided in the embodiments of the present invention more comprehensible, the following uses layer 2 network devices running the FCoE protocol as an example. In an Ethernet networking architecture shown in FIG 2, an FCoE switch A and an FCoE switch B may firstly learn and store FCoE routing information of an entire network using the Fiber Channel Shortest Path First (Fiber Channel Shortest Path First in English, FSPF for short) protocol. A server accesses a storage device by using the FCoE switch A and the FCoE switch B. The server sends an FCoE data packet to the storage device; the FCoE switch A sends, according to the FCoE routing information stored on the FCoE switch A, the FCoE data packet to the FCoE switch B by using a method for forwarding a packet in the prior art. When the FCoE switch B detects congestion, it may sample an FCoE data packet from FCoE data packets causing congestion, that is, data packets in a buffer queue of the FCoE switch B, and construct a congestion notification packet by using an FCID of the server included in the sampled FCoE data packet as a destination FCID; query the FCoE routing information stored on the FCoE switch B to obtain a route entry corresponding to the FCID, and send the congestion notification packet to the FCoE switch A according to the route entry. The FCoE switch A receives the congestion notification packet, and queries the FCoE routing information stored on the FCoE switch A according to the destination FCID included in the congestion notification packet to obtain a route entry corresponding to the FCID of the server. The FCoE switch A sends the congestion notification packet to the server according to the obtained route entry, so that the server reduces a packet transmission rate according to the congestion notification packet, thereby essentially resolving the congestion.

Alternatively, the FCoE switch B may further construct the congestion notification packet by using an FCID of the FCoE switch B as the source FCID and using an FCID of the server included in the sampled FCoE data packet as the destination FCID.

In this embodiment, when a first network device detects congestion, the first network device acquires a data packet from a buffer queue of the first network device, where the data packet is sent by a congestion source device and includes a network address of the congestion source device; then the first network device generates a congestion notification packet according to the network address of the congestion source device, where the congestion notification packet includes the network address of the congestion source device; and the first network device sends the congestion notification packet to a second network device, so that the second network device sends the congestion notification packet according to the network address of the congestion source device. In this way, the congestion notification packet reaches the congestion source device, thereby improving reliability of congestion processing.

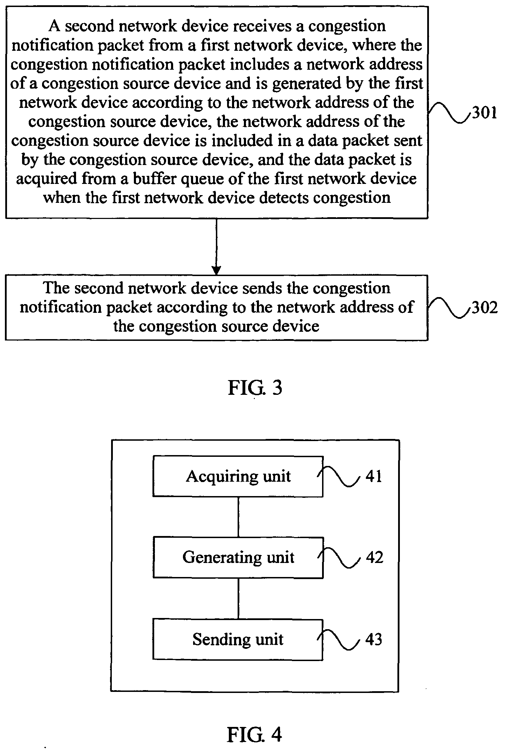

FIG 3 is a schematic flowchart of a method for processing congestion according to another embodiment of the present invention. The method is applied in a network scenario where a source MAC address and a destination MAC address in a packet header of a data packet are changed at each hop. As shown in FIG 3, the method includes the following steps:
301. A second network device receives a congestion notification packet from a first network device, where the congestion notification packet includes a network address of a congestion source device and is generated by the first network device according to the network address of the congestion source device, the network address of the congestion source device is included in a data packet sent by the congestion source device, and the data packet is acquired from a buffer queue of the first network device when the first network device detects congestion.
302. The second network device sends the congestion notification packet according to the network address of the congestion source device.

Specifically, the first network device and the second network device may include but are not limited to layer 2 network devices running the FCoE protocol, layer 2 network devices running the TRILL protocol, or layer 3 network devices.

Alternatively, in a possible implementation of this embodiment, the first network device may query routing information stored on the first network device to determine a previous-hop network device, that is, the second network device, and obtain a route entry of the previous-hop network device, so that the first network device can send the congestion notification packet according to the route entry.

Alternatively, in a possible implementation of this embodiment, if the first network device and the second network device are layer 2 network devices running the FCoE protocol, accordingly the network address of the congestion source device may be a FCID of the congestion source device, that is, a source FCID included in an FCoE data packet, where the FCID of the congestion source device is included in an FCoE data packet sent by the congestion source device and is used as a source FCID; and the source FCID is not modified in a process of forwarding the FCoE data packet.

Alternatively, in a possible implementation of this embodiment, if the first network device and the second network device are layer 2 network devices running the TRILL protocol, accordingly the network address of the congestion source device may be at least one of an inner source IP address included in a TRILL data packet and an inner source MAC address included in the TRILL data packet, where the inner source IP address of the TRILL data packet is an IP address of the congestion source device and the inner source MAC address of the TRILL data packet is a MAC address of the congestion source device.

Alternatively, in a possible implementation of this embodiment, if the first network device and the second network device are layer 3 network devices, accordingly the network address of the congestion source device may be an IP address of the congestion source device, that is, a source IP address included in an Ethernet data packet.

To make the method provided in the embodiments of the present invention more comprehensible, the following uses layer 2 network devices running the FCoE protocol as an example. In an Ethernet networking architecture shown in FIG 2, an FCoE switch A and an FCoE switch B may firstly learn and store FCoE routing information of an entire network using the FSPF protocol. A server accesses a storage device by using the FCoE switch A and the FCoE switch B. The server sends an FCoE data packet to the storage device; the FCoE switch A sends, according to the FCoE routing information stored on the FCoE switch A, the FCoE data packet to the FCoE switch B by using a method for forwarding a packet in the prior art. When the FCoE switch B detects congestion, it may sample an FCoE data packet from FCoE data packets causing congestion, that is, data packets in a buffer queue of the FCoE switch B, and construct a congestion notification packet by using an FCID of the server included in the sampled FCoE data packet as a destination FCID; query the FCoE routing information stored on the FCoE switch B to obtain a route entry corresponding to the FCID, and send the congestion notification packet to the FCoE switch A according to the route entry. The FCoE switch A receives the congestion notification packet, and queries the FCoE routing information stored on the FCoE switch A according to the destination FCID included in the congestion notification packet to obtain a route entry corresponding to the FCID of the server. The FCoE switch A sends the congestion notification packet to the server according to the obtained route entry, so that the server reduces a packet transmission rate according to the congestion notification packet, thereby essentially resolving the congestion.

Alternatively, the FCoE switch B may further construct the congestion notification packet by using an FCID of the FCoE switch B as the source FCID and using an FCID of the server included in the sampled FCoE data packet as the destination FCID.

In this embodiment, a second network device receives a congestion notification packet from a first network device, where the congestion notification packet includes a network address of a congestion source device, so that the second network device can send the congestion notification packet according to the network address of the congestion source device. In this way, the congestion notification packet reaches the congestion source device, thereby improving reliability of congestion processing.

It should be noted that, in the foregoing method embodiments, for description simplicity, the methods are described as a combination of a series of actions. It is understandable by those skilled in the art that the present invention is not limited by a sequence of the actions. Some steps may be performed in other sequences or simultaneously according to the present invention. In addition, it is understandable by those skilled in the art that the embodiments in this specification are exemplary embodiments and involved actions and modules are not mandatory for the present invention.

In the foregoing embodiments, focuses of descriptions of the embodiments vary, a detailed description may not be available in some embodiments, and reference may be made to related descriptions of other embodiments.

FIG 4 is a schematic structural diagram of a network device according to another embodiment of the present invention. The network device modifies a source MAC address and a destination MAC address in a packet header of a data packet at each hop in a process of forwarding the data packet. As shown in FIG. 4, the network device according to this embodiment may include an acquiring unit 41, a generating unit 42, and a sending unit 43. The acquiring unit 41 is configured to acquire, when a network device detects congestion, a data packet from a buffer queue of the network device, and transmit the data packet to the generating unit 42, where the data packet is sent by a congestion source device and includes a network address of the congestion source device. The generating unit 42 is configured to generate a congestion notification packet according to the network address of the congestion source device, and transmit the congestion notification packet to the sending unit 43, where the congestion notification packet includes the network address of the congestion source device. The sending unit 43 is configured to send the congestion notification packet to a second network device, so that the second network device sends the congestion notification packet according to the network address of the congestion source device.

Specifically, the network device and the second network device may include but are not limited to layer 2 network devices running the FCoE protocol, layer 2 network devices running the TRILL protocol, or layer 3 network devices.

Alternatively, in a possible implementation of this embodiment, the sending unit 43 may query routing information stored on the network device to determine a previous-hop network device, that is, the second network device, and obtain a route entry of the previous-hop network device, so that the sending unit 43 can send the congestion notification packet according to the route entry.

Alternatively, in a possible implementation of this embodiment, if the network device and the second network device are layer 2 network devices running the FCoE protocol, accordingly the network address of the congestion source device may be a FCID of the congestion source device, that is, a source FCID included in an FCoE data packet. The FCID of the congestion source device is included in an FCoE data packet sent by the congestion source device and is used as a source FCID; and the source FCID is not modified in a process of forwarding the FCoE data packet.

Alternatively, in a possible implementation of this embodiment, if the network device and the second network device are layer 2 network devices running the TRILL protocol, accordingly the network address of the congestion source device may be at least one of an inner source IP address included in a TRILL data packet and an inner source MAC address included in the TRILL data packet, where the inner source IP address of the TRILL data packet is an IP address of the congestion source device and the inner source MAC address of the TRILL data packet is a MAC address of the congestion source device.

Alternatively, in a possible implementation of this embodiment, if the network device and the second network device are layer 3 network devices, accordingly the network address of the congestion source device may be an IP address of the congestion source device, that is, a source IP address included in an Ethernet data packet.

For details, reference may be made to related content in the embodiment shown in FIG. 1, and no further details are provided herein.

In this embodiment, when a network device detects congestion, the network device acquires, by using an acquiring unit, a data packet from a buffer queue of the network device, where the data packet is sent by a congestion source device and includes a network address of the congestion source device; then a generating unit generates a congestion notification packet according to the network address of the congestion source device, where the congestion notification packet includes the network address of the congestion source device; and a sending unit sends the congestion notification packet to a second network device, so that the second network device sends the congestion notification packet according to the network address of the congestion source device. In this way, the congestion notification packet reaches the congestion source device, thereby improving reliability of congestion processing.

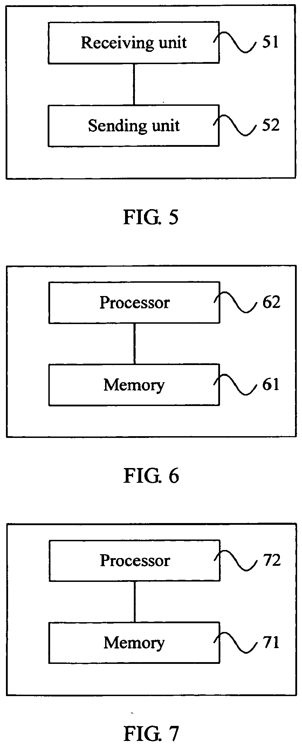

FIG 5 is a schematic structural diagram of a network device according to another embodiment of the present invention. The network device modifies a source MAC address and a destination MAC address in a packet header of a data packet at each hop in a process of forwarding the data packet. As shown in FIG 5, the network device according to this embodiment may include a receiving unit 51 and a sending unit 52. The receiving unit 51 is configured to receive a congestion notification packet sent by a first network device, where the congestion notification packet includes a network address of a congestion source device; and transmit the congestion notification packet to the sending unit 52, where the congestion notification packet is generated by the first network device according to the network address of the congestion source device, the network address of the congestion source device is included in a data packet sent by the congestion source device, and the data packet is acquired from a buffer queue of the first network device when the first network device detects congestion. The sending unit 52 is configured to send the congestion notification packet according to the network address of the congestion source device.

Specifically, the first network device and the network device may include but are not limited to layer 2 network devices running the FCoE protocol, layer 2 network devices running the TRILL protocol, or layer 3 network devices.

Alternatively, in a possible implementation of this embodiment, the first network device may query routing information stored on the first network device to determine a previous-hop network device, that is, the network device, and obtain a route entry of the previous-hop network device, so that the first network device can send the congestion notification packet according to the route entry.

Alternatively, in a possible implementation of this embodiment, if the first network device and the network device are layer 2 network devices running the FCoE protocol, accordingly the network address of the congestion source device may be a FCID of the congestion source device, that is, a source FCID included in an FCoE data packet. The FCID of the congestion source device is included in an FCoE data packet sent by the congestion source device and is used as a source FCID; and the source FCID is not modified in a process of forwarding the FCoE data packet.

Alternatively, in a possible implementation of this embodiment, if the first network device and the network device are layer 2 network devices running the TRILL protocol, accordingly the network address of the congestion source device may be at least one of an inner source IP address included in a TRILL data packet and an inner source MAC address included in the TRILL data packet, where the inner source IP address of the TRILL data packet is an IP address of the congestion source device and the inner source MAC address of the TRILL data packet is a MAC address of the congestion source device.

Alternatively, in a possible implementation of this embodiment, if the first network device and the network device are layer 3 network devices, accordingly the network address of the congestion source device may be an IP address of the congestion source device, that is, a source IP address included in an Ethernet data packet.

For details, reference may be made to related content in the embodiment shown in FIG. 2, and no further details are provided herein.

In this embodiment, a network device receives, by using a receiving unit, a congestion notification packet from a first network device, where the congestion notification packet includes a network address of a congestion source device, so that a sending unit can send the congestion notification packet according to the network address of the congestion source device. In this way, the congestion notification packet reaches the congestion source device, thereby improving reliability of congestion processing.

FIG 6 is a schematic structural diagram of a network device according to another embodiment of the present invention. The network device modifies a source MAC address and a destination MAC address in a packet header of a data packet at each hop in a process of forwarding the data packet. As shown in FIG 6, the network device according to this embodiment may include a memory 61 and at least one processor 62. The memory 61 is configured to store executable program codes; and the processor 62 runs, by reading the executable program codes stored in the memory 61, a program corresponding to the executable program codes to:
when the network device detects congestion, acquire a data packet from a buffer queue of the network device, where the data packet is sent by a congestion source device and includes a network address of the congestion source device; generate a congestion notification packet according to the network address of the congestion source device, where the congestion notification packet includes the network address of the congestion source device; and send the congestion notification packet to a second network device, so that the second network device sends the congestion notification packet according to the network address of the congestion source device.

Specifically, the network device and the second network device may include but are not limited to layer 2 network devices running the FCoE protocol, layer 2 network devices running the TRILL protocol, or layer 3 network devices.

Alternatively, in a possible implementation of this embodiment, the processor 62 may query routing information stored on the network device to determine a previous-hop network device, that is, the second network device, and obtain a route entry of the previous-hop network device, so that the processor 62 can send the congestion notification packet according to the route entry.

Alternatively, in a possible implementation of this embodiment, if the network device and the second network device are layer 2 network devices running the FCoE protocol, accordingly the network address of the congestion source device may be a FCID of the congestion source device, that is, a source FCID included in an FCoE data packet. The FCID of the congestion source device is included in an FCoE data packet sent by the congestion source device and is used as a source FCID; and the source FCID is not modified in a process of forwarding the FCoE data packet.

Alternatively, in a possible implementation of this embodiment, if the network device and the second network device are layer 2 network devices running the TRILL protocol, accordingly the network address of the congestion source device may be at least one of an inner source IP address included in a TRILL data packet and an inner source MAC address included in the TRILL data packet, where the inner source IP address of the TRILL data packet is an IP address of the congestion source device and the inner source MAC address of the TRILL data packet is a MAC address of the congestion source device.

Alternatively, in a possible implementation of this embodiment, if the network device and the second network device are layer 3 network devices, accordingly the network address of the congestion source device may be an IP address of the congestion source device, that is, a source IP address included in an Ethernet data packet.

For details, reference may be made to related content in the embodiment shown in FIG. 1, and no further details are provided herein.

In this embodiment, when a network device detects congestion, the network device acquires, by using a processor, a data packet from a buffer queue of the network device, where the data packet is sent by a congestion source device and includes a network address of the congestion source device, and generates a congestion notification packet according to the network address of the congestion source device, where the congestion notification packet includes the network address of the congestion source device; the processor sends the congestion notification packet to a second network device, so that the second network device sends the congestion notification packet according to the network address of the congestion source device. In this way, the congestion notification packet reaches the congestion source device, thereby improving reliability of congestion processing.

FIG 7 is a schematic structural diagram of a network device according to another embodiment of the present invention. As shown in FIG 7, the network device according to this embodiment may include a memory 71 and at least one processor 72. The memory 71 is configured to store executable program codes; and the processor 72 runs, by reading the executable program codes stored in the memory 71, a program corresponding to the executable program codes to:
receive a congestion notification packet from a first network device, where the congestion notification packet includes a network address of a congestion source device and is generated by the first network device according to the network address of the congestion source device, the network address of the congestion source device is included in a data packet sent by the congestion source device, and the data packet is acquired from a buffer queue of the first network device when the first network device detects congestion; and send the congestion notification packet according to the network address of the congestion source device.

Specifically, the first network device and the network device may include but are not limited to layer 2 network devices running the FCoE protocol, layer 2 network devices running the TRILL protocol, or layer 3 network devices.

Alternatively, in a possible implementation of this embodiment, the first network device may query routing information stored on the first network device to determine a previous-hop network device, that is, the network device, and obtain a route entry of the previous-hop network device, so that the first network device can send the congestion notification packet according to the route entry.

Alternatively, in a possible implementation of this embodiment, if the first network device and the network device are layer 2 network devices running the FCoE protocol, accordingly the network address of the congestion source device may be a FCID of the congestion source device, that is, a source FCID included in an FCoE data packet. The FCID of the congestion source device is included in an FCoE data packet sent by the congestion source device and is used as a source FCID; and the source FCID is not modified in a process of forwarding the FCoE data packet.

Alternatively, in a possible implementation of this embodiment, if the first network device and the network device are layer 2 network devices running the TRILL protocol, accordingly the network address of the congestion source device may be at least one of an inner source IP address included in a TRILL data packet and an inner source MAC address included in the TRILL data packet, where the inner source IP address of the TRILL data packet is an IP address of the congestion source device and the inner source MAC address of the TRILL data packet is a MAC address of the congestion source device.

Alternatively, in a possible implementation of this embodiment, if the first network device and the network device are layer 3 network devices, accordingly the network address of the congestion source device may be an IP address of the congestion source device, that is, a source IP address included in an Ethernet data packet.

For details, reference may be made to related content in the embodiment shown in FIG. 2, and no further details are provided herein.

In this embodiment, a network device receives, by using a processor, a congestion notification packet from a first network device, where the congestion notification packet includes a network address of a congestion source device, so that the processor can send the congestion notification packet according to the network address of the congestion source device. In this way, the congestion notification packet reaches the congestion source device, thereby improving reliability of congestion processing.

It can be clearly understood by those skilled in the art that, for ease and simplicity of description, for specific working processes of the preceding systems, apparatuses, and units, reference may be made to the corresponding processes in the foregoing method embodiments, and no further details are provided herein.

In the embodiments provided in the present invention, it should be understood that the disclosed systems, apparatuses, and methods may be implemented in other manners. For example, the preceding apparatus embodiments are only for illustration. For example, division of units is only division of logical functions. In actual implementation, other division manners may be available, for example, multiple units or components may be combined or integrated into another system, or some features may be ignored or not be executed. In addition, the displayed or discussed mutual couplings, direct coupling, or communications connections may be implemented by using some interfaces. The indirect couplings or communications connections between the apparatuses or units may be implemented electrically, mechanically, or in other forms.

The units that are described as split parts may be or may not be split physically. The parts that are displayed as the units may be or may not be physical units. That is, the parts may be located in one place or distributed on multiple network units. Some or all of the units may be selected according to actual needs to achieve objectives of the technical solutions provided in the embodiments.

In addition, functional units in the embodiments of the present invention may be integrated into one processing unit, or exist independently and physically; or two or more units are integrated into one unit. The integrated unit may be implemented in a form of hardware or in a form of hardware plus a software functional unit.

The integrated unit implemented in a form of a software functional unit may be stored in a computer readable storage medium. The software functional unit is stored in a storage medium, including several commands used to enable a computer device (a personal computer, a server, a network device, or the like) or a processor (processor in English) to perform some steps of the method provided in each embodiment of the present invention. The storage medium includes: any media that can store program codes, such as a USB disk, a movable hard disk, a read-only memory (Read-Only Memory in English, ROM for short), a random access memory (Random Access Memory in English, RAM for short), a magnetic disk or an optical disk.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments, or make equivalent replacements to some technical features thereof, without departing from the scope of the technical solutions of the embodiments of the present invention.

## Claims

1. A method for processing congestion, the method is applied in a network scenario where a source medium access control, MAC, address and a destination MAC address in a packet header of a data packet are changed at each hop, and comprises:
when a first network device detects congestion, acquiring (101), by the first network device, a data packet from a buffer queue of the first network device, wherein the data packet is sent by a congestion source device and comprises a network address of the congestion source device;
generating (102), by the first network device, a congestion notification packet according to the network address of the congestion source device, wherein the congestion notification packet comprises the network address of the congestion source device; and
sending (103), by the first network device, the congestion notification packet to a second network device, so that the second network device sends the congestion notification packet according to the network address of the congestion source device;
wherein the second network device is a previous-hop network device of the first network device.

2. The method according to claim 1, wherein the first network device and the second network device are layer 2 network devices running the Fiber Channel Over Ethernet, FCoE, protocol; the network address of the congestion source device is a fiber channel ID, FCID, of the congestion source device; a source FCID of the congestion notification packet is the FCID of the first network device, and a destination FCID of the congestion notification packet is the FCID of the congestion source device.

3. The method according to claim 1, wherein the first network device and the second network device are layer 2 network devices running the Transparent Interconnection of Lots of Link, TRILL, protocol; the data packet is a TRILL data packet; and the network address of the congestion source device comprises at least one of an inner source IP address included in the TRILL data packet and an inner source MAC address included in the TRILL data packet.

4. The method according to claim 1, wherein the first network device and the second network device are layer 3 network devices; and the network address of the congestion source device is an IP address of the congestion source device.

5. A method for processing congestion, the method is applied in a network scenario where a source medium access control, MAC, address and a destination MAC address in a packet header of a data packet are changed at each hop, and comprises:
receiving (301), by a second network device, a congestion notification packet sent by a first network device, wherein the congestion notification packet comprises a network address of a congestion source device, the congestion notification packet is generated by the first network device according to the network address of the congestion source device, the network address of the congestion source device is comprised in a data packet sent by the congestion source device, and the data packet is acquired from a buffer queue of the first network device when the first network device detects congestion; and
sending (302), by the second network device, the congestion notification packet according to the network address of the congestion source device; wherein the second network device is a previous-hop network device of the first network device.

6. The method according to claim 5, wherein the first network device and the second network device are layer 2 network devices running the Fiber Channel Over Ethernet, FCoE, protocol; the network address of the congestion source device is a fiber channel ID, FCID, of the congestion source device; a source FCID of the congestion notification packet is the FCID of the first network device, and a destination FCID of the congestion notification packet is the FCID of the congestion source device.

7. The method according to claim 5, wherein the first network device and the second network device are layer 2 network devices running the Transparent Interconnection of Lots of Link, TRILL, protocol; the data packet is a TRILL data packet; and the network address of the congestion source device comprises at least one of an inner source IP address included in the TRILL data packet and an inner source MAC address included in the TRILL data packet.

8. The method according to claim 5, wherein the first network device and the second network device are layer 3 network devices; and the network address of the congestion source device is an IP address of the congestion source device.

9. A network device, the network device is configured to change a source medium access control, MAC, address and a destination MAC address in a packet header of a data packet when transferring the data packet, and comprises an acquiring unit, a generating unit and a sending unit, wherein:
the acquiring unit (41), configured to acquire, when a network device detects congestion, a data packet from a buffer queue of the network device, and transmit the data packet to the generating unit, wherein the data packet is sent by a congestion source device and comprises a network address of the congestion source device;
the generating unit (42), configured to generate a congestion notification packet according to the network address of the congestion source device, and transmit the congestion notification packet to the sending unit, wherein the congestion notification packet comprises the network address of the congestion source device; and
the sending unit (43), configured to send the congestion notification packet to another network device, so that the another network device sends the congestion notification packet according to the network address of the congestion source device; wherein the another network device is a previous-hop network device of the network device.

10. The network device according to claim 9, wherein: the network device and the second network device are layer 2 network devices running the Fiber Channel Over Ethernet, FCoE, protocol; the network address of the congestion source device is a fiber channel ID, FCID, of the congestion source device; a source FCID of the congestion notification packet is the FCID of the network device, and a destination FCID of the congestion notification packet is the FCID of the congestion source device.

11. The network device according to claim 9, wherein the network device and the second network device are layer 2 network devices running the Transparent Interconnection of Lots of Link, TRILL, protocol; the data packet is a TRILL data packet; and the network address of the congestion source device comprises at least one of an inner source IP address included in the TRILL data packet and an inner source MAC address included in the TRILL data packet.

12. The network device according to claim 9, wherein the network device and the another network device are layer 3 network devices; and the network address of the congestion source device is an IP address of the congestion source device.

13. A network device, the network device is configured to change a source medium access control, MAC, address and a destination MAC address in a packet header of a data packet when transferring the data packet, and includes a receiving unit and a sending unit, wherein:
the receiving unit (51), configured to receive a congestion notification packet from another network device, wherein the congestion notification packet comprises a network address of a congestion source device; and transmit the congestion notification packet to the sending unit, wherein the congestion notification packet is generated by the another network device according to the network address of the congestion source device, the network address of the congestion source device is comprised in a data packet sent by the congestion source device, and the data packet is acquired from a buffer queue of the another network device when the another network device detects congestion; wherein the network device is a previous-hop network device of the another network device; and
the sending unit (52), configured to send the congestion notification packet according to the network address of the congestion source device.

14. The network device according to claim 13, wherein the first network device and the network device are layer 2 network devices running the Fiber Channel Over Ethernet, FCoE, protocol; the network address of the congestion source device is a fiber channel ID, FCID, of the congestion source device; a source FCID of the congestion notification packet is the FCID of the another network device, and a destination FCID of the congestion notification packet is the FCID of the congestion source device.

15. The network device according to claim 13, wherein: the first network device and the network device are layer 2 network devices running the Transparent Interconnection of Lots of Link (TRILL) protocol; the data packet is a TRILL data packet; and the network address of the congestion source device comprises at least one of an inner source IP address included in the TRILL data packet and an inner source MAC address included in the TRILL data packet.

## Patentansprüche

1. Verfahren zum Verarbeiten einer Überlastung, wobei das Verfahren auf ein Netzszenario angewendet wird, in dem eine Quell-Medienzugriffssteuerungs-Adresse, MAC-Adresse, und eine Ziel-MAC-Adresse in einem Paketkopfsatz eines Datenpakets bei jedem Sprung geändert werden, und Folgendes umfasst:
wenn eine erste Netzvorrichtung eine Überlastung detektiert, Erfassen (101) durch die erst Netzvorrichtung eines Datenpakets von einer Pufferwarteschlange der ersten Netzvorrichtung, wobei das Datenpaket durch eine Überlastungsquellvorrichtung gesendet wird und eine Netzadresse der Überlastungsquellvorrichtung enthält;
Erzeugen (102) durch die erste Netzvorrichtung eines Überlastungsmeldepakets entsprechend der Netzadresse der Überlastungsquellvorrichtung, wobei das Überlastungsmeldepaket die Netzadresse der Überlastungsquellvorrichtung enthält; und
Senden (103) durch die erste Netzvorrichtung des Überlastungsmeldepakets zu einer zweiten Netzvorrichtung, so dass die zweite Netzvorrichtung das Überlastungsmeldepaket entsprechend der Netzadresse der Überlastungsquellvorrichtung sendet;
wobei die zweite Netzvorrichtung eine Netzvorrichtung eines früheren Sprungs der ersten Netzvorrichtung ist.

2. Verfahren nach Anspruch 1, wobei die erste Netzvorrichtung und die zweite Netzvorrichtung Schicht-2-Netzvorrichtungen sind, die das "Fiber Channel over Ethernet"-Protokoll, FCoE-Protokoll, ausführen; wobei die Netzadresse der Überlastungsquellvorrichtung eine Faserkanal-ID, FCID, der Überlastungsquellvorrichtung ist; eine Quell-FCID des Überlastungsmeldepakets die FCID der ersten Netzvorrichtung ist und eine Ziel-FCID des Überlastungsmeldepakets die FCID der Überlastungsquellvorrichtung ist.

3. Verfahren nach Anspruch 1, wobei die erste Netzvorrichtung und die zweite Netzvorrichtung Schicht-2-Netzvorrichtungen sind, die das "Transparent Interconnection of Lots of Link"-Protokoll, TRILL-Protokoll, ausführen; wobei das Datenpaket ein TRILL-Datenpaket ist; und die Netzadresse der Überlastungsquellvorrichtung eine innere Quell-IP-Adresse, die in dem TRILL-Datenpaket enthalten ist, und/oder eine innere Quell-MAC-Adresse, die in dem TRILL-Datenpaket enthalten ist, umfasst.

4. Verfahren nach Anspruch 1, wobei die erste Netzvorrichtung und die zweite Netzvorrichtung Schicht-3-Netzvorrichtungen sind; und die Netzadresse der Überlastungsquellvorrichtung eine IP-Adresse der Überlastungsquellvorrichtung ist.

5. Verfahren zum Verarbeiten einer Überlastung, wobei das Verfahren in einem Netzszenario angewendet wird, in dem eine Quell-Medienzugriffssteuerungs-Adresse, MAC-Adresse, und eine Ziel-MAC-Adresse in einem Paketkopfsatz eines Datenpakets bei jedem Sprung geändert werden, und Folgendes umfasst:
Empfangen (301) durch eine zweite Netzvorrichtung eines Überlastungsmeldepakets, das von einer ersten Netzvorrichtung gesendet wird, wobei das Überlastungsmeldepaket eine Netzadresse einer Überlastungsquellvorrichtung enthält, wobei das Überlastungsmeldepaket durch die erste Netzvorrichtung entsprechend der Netzadresse der Überlastungsquellvorrichtung erzeugt wird, wobei die Netzadresse der Überlastungsquellvorrichtung in einem durch die Überlastungsquellvorrichtung gesendeten Datenpaket enthalten ist und wobei das Datenpaket aus einer Pufferwarteschlange der ersten Netzvorrichtung erfasst wird, wenn die erste Netzvorrichtung eine Überlastung detektiert; und
Senden (302) durch die zweite Netzvorrichtung des Überlastungsmeldepakets entsprechend der Netzadresse der Überlastungsquellvorrichtung; wobei die zweite Netzvorrichtung eine Netzvorrichtung eines früheren Sprungs der ersten Netzvorrichtung ist.

6. Verfahren nach Anspruch 5, wobei die erste Netzvorrichtung und die zweite Netzvorrichtung Schicht-2-Netzvorrichtungen sind, die das " Fiber Channel over Ethernet"-Protokoll, FCoE-Protokoll, ausführen; die Netzadresse der Überlastungsquellvorrichtung eine Faserkanal-ID, FCID, der Überlastungsquellvorrichtung ist; eine Quell-FCID des Überlastungsmeldepakets die FCID der ersten Netzvorrichtung ist und eine Ziel-FCID des Überlastungsmeldepakets die FCID der Überlastungsquellvorrichtung ist.

7. Verfahren nach Anspruch 5, wobei die erste Netzvorrichtung und die zweite Netzvorrichtung Schicht-2-Netzvorrichtungen sind, die das "Transparent Interconnection of Lots of Link"-Protokoll, TRILL-Protokoll, ausführen; wobei das Datenpaket ein TRILL-Datenpaket ist; und die Netzadresse der Überlastungsquellvorrichtung eine innere Quell-IP-Adresse, die in dem TRILL-Datenpaket enthalten ist; und/oder eine innere Quell-MAC-Adresse, die in dem TRILL-Datenpaket enthalten ist, umfasst.

8. Verfahren nach Anspruch 5, wobei die erste Netzvorrichtung und die zweite Netzvorrichtung Schicht-3-Netzvorrichtungen sind; und die Netzadresse der Überlastungsquellvorrichtung eine IP-Adresse der Überlastungsquellvorrichtung ist.

9. Netzvorrichtung, wobei die Netzvorrichtung konfiguriert ist, eine Quell-Medienzugriffssteuerungs-Adresse, MAC-Adresse, und eine Ziel-MAC-Adresse in einem Paketkopfsatz eines Datenpakets zu ändern, wenn das Datenpaket übertragen wird, und eine Erfassungseinheit, eine Erzeugungseinheit und eine Sendeeinheit umfasst, wobei:
die Erfassungseinheit (41) konfiguriert ist, dann, wenn eine Netzvorrichtung eine Überlastung detektiert, ein Datenpaket von einer Pufferwarteschlange der Netzvorrichtung zu erfassen und das Datenpaket an die Erzeugungseinheit zu übertragen, wobei das Datenpaket durch eine Überlastungsquellvorrichtung gesendet wird und eine Netzadresse der Überlastungsquellvorrichtung enthält;
die Erzeugungseinheit (42) konfiguriert ist, ein Überlastungsmeldepaket entsprechend der Netzadresse der Überlastungsquellvorrichtung zu erzeugen und das Überlastungsmeldepaket an die Sendeeinheit zu übertragen, wobei das Überlastungsmeldepaket die Netzadresse der Überlastungsquellvorrichtung enthält; und
die Sendeeinheit (43) konfiguriert ist, das Überlastungsmeldepaket zu einer weiteren Netzvorrichtung zu senden, so dass die weitere Netzvorrichtung das Überlastungsmeldepaket entsprechend der Netzadresse der Überlastungsquellvorrichtung sendet; wobei die weitere Netzvorrichtung eine Netzvorrichtung eines früheren Sprungs der Netzvorrichtung ist.

10. Netzvorrichtung nach Anspruch 9, wobei: die Netzvorrichtung und die zweite Netzvorrichtung Schicht-2-Netzvorrichtungen sind, die das "Fiber Channel over Ethernet"-Protokoll, FCoE-Protokoll, ausführen; die Netzadresse der Überlastungsquellvorrichtung eine Faserkanal-ID, FCID, der Überlastungsquellvorrichtung ist; eine Quell-FCID des Überlastungsmeldepakets die FCID der Netzvorrichtung ist und eine Ziel-FCID des Überlastungsmeldepakets die FCID der Überlastungsquellvorrichtung ist.

11. Netzvorrichtung nach Anspruch 9, wobei die Netzvorrichtung und die zweite Netzvorrichtung Schicht-2-Netzvorrichtungen sind, die das "Transparent Interconnection of Lots of Link"-Protokoll, TRILL-Protokoll, ausführen, wobei das Datenpaket ein TRILL-Datenpaket ist; und die Netzadresse der Überlastungsquellvorrichtung eine innere Quell-IP-Adresse, die in dem TRILL-Datenpaket enthalten ist, und/oder eine innere Quell-MAC-Adresse, die in dem TRILL-Datenpaket enthalten ist, umfasst.

12. Netzvorrichtung nach Anspruch 9, wobei die Netzvorrichtung und die weitere Netzvorrichtung Schicht-3-Netzvorrichtungen sind; und die Netzadresse der Überlastungsquellvorrichtung eine IP-Adresse der Überlastungsquellvorrichtung ist.

13. Netzvorrichtung, wobei die Netzvorrichtung konfiguriert ist, eine Quell-Medienzugriffssteuerungs-Adresse, MAC-Adresse, und eine Ziel-MAC-Adresse in einem Paketkopfsatz eines Datenpakets zu ändern, wenn das Datenpaket übertragen wird, und eine Empfangseinheit und eine Sendeeinheit umfasst, wobei:
die Empfangseinheit (51) konfiguriert ist, ein Überlastungsmeldepaket von einer weiteren Netzvorrichtung zu empfangen, wobei das Überlastungsmeldepaket eine Netzadresse einer Überlastungsquellvorrichtung enthält; und das Überlastungsmeldepaket an die Sendeeinheit zu übertragen, wobei das Überlastungsmeldepaket durch die weitere Netzvorrichtung entsprechend der Netzadresse der Überlastungsquellvorrichtung erzeugt wird, die Netzadresse der Überlastungsquellvorrichtung in einem durch die Überlastungsquellvorrichtung gesendeten Datenpaket enthalten ist und das Datenpaket aus einer Pufferwarteschlange der weiteren Netzvorrichtung erfasst wird, wenn die weitere Netzvorrichtung eine Überlastung detektiert; wobei die Netzvorrichtung eine Netzvorrichtung eines früheren Sprungs der weiteren Netzvorrichtung ist; und
die Sendeeinheit (52) konfiguriert ist, das Überlastungsmeldepaket entsprechend der Netzadresse der Überlastungsquellvorrichtung zu senden.

14. Netzvorrichtung nach Anspruch 13, wobei die erste Netzvorrichtung und die Netzvorrichtung Schicht-2-Netzvorrichtungen sind, die das "Fiber Channel over Ethernet"-Protokoll, FCoE-Protokoll ausführen; die Netzadresse der Überlastungsquellvorrichtung eine Faserkanal-ID, FCID, der Überlastungsquellvorrichtung ist; eine Quell-FCID des Überlastungsmeldepakets die FCID der weiteren Netzvorrichtung ist und eine Ziel-FCID des Überlastungsmeldepakets die FCID der Überlastungsquellvorrichtung ist.

15. Netzvorrichtung nach Anspruch 13, wobei: die erste Netzvorrichtung und die Netzvorrichtung Schicht-2-Netzvorrichtungen sind, die das "Transparent Interconnection of Lots of Link"-Protokoll (TRILL-Protokoll) ausführen; das Datenpaket ein TRILL-Datenpaket ist; und die Netzadresse der Überlastungsquellvorrichtung eine innere Quell-IP-Adresse, die in dem TRILL-Datenpaket enthalten ist, und/oder eine innere Quell-MAC-Adresse, die in dem TRILL-Datenpaket enthalten ist, umfasst.

## Revendications

1. Procédé de traitement d'encombrement, le procédé étant appliqué dans un scénario de réseau dans lequel une adresse de commande d'accès au support, MAC, source et une adresse MAC destinataire dans un en-tête de paquet d'un paquet de données sont changées à chaque saut, et comprend :
quand un premier dispositif de réseau détecte un encombrement, l'acquisition (101), par le premier dispositif de réseau, d'un paquet de données à partir d'une file d'attente tampon du premier dispositif de réseau, le paquet de données étant envoyé par un dispositif source d'encombrement et comprenant une adresse réseau du dispositif source d'encombrement,
la génération (102), par le premier dispositif de réseau, d'un paquet de notification d'encombrement conformément à l'adresse réseau du dispositif source d'encombrement, le paquet de notification d'encombrement comprenant l'adresse réseau du dispositif source d'encombrement ; et
l'envoi (103), par le premier dispositif réseau, du paquet de notification d'encombrement à un second dispositif de réseau, de telle sorte que le second dispositif de réseau envoie le paquet de notification d'encombrement conformément à l'adresse réseau du dispositif source d'encombrement ;
dans lequel le second dispositif de réseau est un dispositif de réseau de saut antérieur du premier dispositif de réseau.

2. Procédé selon la revendication 1, dans lequel le premier dispositif de réseau et le second dispositif de réseau sont des dispositifs de réseau de couche 2 exécutant le protocole FCoE, Fiber Channel Over Ethernet ; l'adresse réseau du dispositif source d'encombrement est un ID Fiber Channel, FCID, du dispositif source d'encombrement ; un FCID source du paquet de notification d'encombrement est le FCID du premier dispositif de réseau, et un FCID destinataire du paquet de notification d'encombrement est le FCID du dispositif source d'encombrement.

3. Procédé selon la revendication 1, dans lequel le premier dispositif de réseau et le second dispositif de réseau sont des dispositifs de réseau de couche 2 exécutant le protocole TRILL, Transparent Interconnection of Lots of Link ; le paquet de données est un paquet de données TRILL ; et l'adresse réseau du dispositif source d'encombrement comprend au moins l'une d'une adresse IP source interne incluse dans le paquet de données TRILL et d'une adresse MAC source interne incluse dans le paquet de données TRILL.

4. Procédé selon la revendication 1, dans lequel le premier dispositif de réseau et le second dispositif de réseau sont des dispositifs de réseau de couche 3 ; et l'adresse réseau du dispositif source d'encombrement est une adresse IP du dispositif source d'encombrement.

5. Procédé de traitement d'encombrement, le procédé étant appliqué dans un scénario de réseau dans lequel une adresse de commande d'accès au support, MAC, source et une adresse MAC destinataire dans un en-tête de paquet d'un paquet de données sont changées à chaque saut, et comprend :
la réception (301), par un second dispositif de réseau, d'un paquet de notification d'encombrement envoyé par un premier dispositif de réseau, le paquet de notification d'encombrement comprenant une adresse réseau d'un dispositif source d'encombrement, le paquet de notification d'encombrement étant généré par le premier dispositif de réseau conformément à l'adresse réseau du dispositif source d'encombrement, l'adresse réseau du dispositif source d'encombrement est comprise dans un paquet de données envoyé par le dispositif source d'encombrement, et le paquet de données est acquis à partir d'une file d'attente tampon du premier dispositif de réseau quand le premier dispositif de réseau détecte un encombrement ; et
l'envoi (302), par le second dispositif de réseau, du paquet de notification d'encombrement conformément à l'adresse réseau du dispositif source d'encombrement ; dans lequel le second dispositif de réseau est un dispositif de réseau de saut antérieur du premier dispositif de réseau.

6. Procédé selon la revendication 5, dans lequel le premier dispositif de réseau et le second dispositif de réseau sont des dispositifs de réseau de couche 2 exécutant le protocole FCoE, Fiber Channel Over Ethernet ; l'adresse réseau du dispositif source d'encombrement est un ID Fiber Channel, FCID, du dispositif source d'encombrement ; un FCID source du paquet de notification d'encombrement est le FCID du premier dispositif de réseau, et un FCID destinataire du paquet de notification d'encombrement est le FCID du dispositif source d'encombrement.

7. Procédé selon la revendication 5, dans lequel le premier dispositif de réseau et le second dispositif de réseau sont des dispositifs de réseau de couche 2 exécutant le protocole TRILL, Transparent Interconnection of Lots of Link ; le paquet de données est un paquet de données TRILL ; et l'adresse réseau du dispositif source d'encombrement comprend au moins l'une d'une adresse IP source interne incluse dans le paquet de données TRILL et d'une adresse MAC source interne incluse dans le paquet de données TRILL.

8. Procédé selon la revendication 5, dans lequel le premier dispositif de réseau et le second dispositif de réseau sont des dispositifs de réseau de couche 3 ; et l'adresse réseau du dispositif source d'encombrement est une adresse IP du dispositif source d'encombrement.

9. Dispositif de réseau, le dispositif de réseau étant configuré pour changer une adresse de commande d'accès au support, MAC, source et une adresse MAC destinataire dans un en-tête de paquet d'un paquet de données lors du transfert du paquet de données, et comprenant une unité d'acquisition, une unité de génération et une unité d'envoi, dans lequel :
l'unité d'acquisition (41) est configurée pour acquérir, quand un dispositif de réseau détecte un encombrement, un paquet de données à partir d'une file d'attente tampon du dispositif de réseau, et transmettre le paquet de données à l'unité de génération, dans lequel le paquet de données est envoyé par un dispositif source d'encombrement et comprend une adresse réseau du dispositif source d'encombrement ;
l'unité de génération (42) est configurée pour générer un paquet de notification d'encombrement conformément à l'adresse réseau du dispositif source d'encombrement, et transmettre le paquet de notification d'encombrement à l'unité d'envoi, le paquet de notification d'encombrement comprenant l'adresse réseau du dispositif source d'encombrement ; et
l'unité d'envoi (43) est configurée pour envoyer le paquet de notification d'encombrement à un autre dispositif de réseau, de telle sorte que l'autre dispositif de réseau envoie le paquet de notification d'encombrement conformément à l'adresse réseau du dispositif source d'encombrement ; dans lequel l'autre dispositif de réseau est un dispositif de réseau de saut antérieur du dispositif de réseau.

10. Dispositif de réseau selon la revendication 9, dans lequel : le dispositif de réseau et le second dispositif de réseau sont des dispositifs de réseau de couche 2 exécutant le protocole FCoE, Fiber Channel Over Ethernet ; l'adresse réseau du dispositif source d'encombrement est un ID Fiber Channel, FCID, du dispositif source d'encombrement ; un FCID source du paquet de notification d'encombrement est le FCID du dispositif de réseau, et un FCID destinataire du paquet de notification d'encombrement est le FCID du dispositif source d'encombrement.

11. Dispositif de réseau selon la revendication 9, dans lequel le dispositif de réseau et le second dispositif de réseau sont des dispositifs de réseau de couche 2 exécutant le protocole TRILL, Transparent Interconnection of Lots of Link ; le paquet de données est un paquet de données TRILL ; et l'adresse réseau du dispositif source d'encombrement comprend au moins l'une d'une adresse IP source interne incluse dans le paquet de données TRILL et d'une adresse MAC source interne incluse dans le paquet de données TRILL.

12. Dispositif de réseau selon la revendication 9, dans lequel le dispositif de réseau et l'autre dispositif de réseau sont des dispositifs de réseau de couche 3 ; et l'adresse réseau du dispositif source d'encombrement est une adresse IP du dispositif source d'encombrement.

13. Dispositif de réseau, le dispositif de réseau étant configuré pour changer une adresse de commande d'accès au support, MAC, source et une adresse MAC destinataire dans un en-tête de paquet d'un paquet de données lors du transfert du paquet de données, et comportant une unité de réception et une unité d'envoi, dans lequel :
l'unité de réception (51) est configurée pour recevoir un paquet de notification d'encombrement depuis un autre dispositif de réseau, le paquet de notification d'encombrement comprenant une adresse réseau d'un dispositif source d'encombrement ; et transmettre le paquet de notification d'encombrement à l'unité d'envoi, dans lequel le paquet de notification d'encombrement est généré par l'autre dispositif de réseau conformément à l'adresse réseau du dispositif source d'encombrement, l'adresse réseau du dispositif source d'encombrement est comprise dans un paquet de données envoyé par le dispositif source d'encombrement, et le paquet de données est acquis à partir d'une file d'attente tampon de l'autre dispositif de réseau quand l'autre dispositif de réseau détecte un encombrement ; dans lequel le dispositif de réseau est un dispositif de réseau de saut antérieur de l'autre dispositif de réseau ; et
l'unité d'envoi (52) est configurée pour envoyer le paquet de notification d'encombrement conformément à l'adresse réseau du dispositif source d'encombrement.

14. Dispositif de réseau selon la revendication 13, dans lequel le premier dispositif de réseau et le second dispositif de réseau sont des dispositifs de réseau de couche 2 exécutant le protocole FCoE, Fiber Channel Over Ethernet ; l'adresse réseau du dispositif source d'encombrement est un ID Fiber Channel, FCID, du dispositif source d'encombrement ; un FCID source du paquet de notification d'encombrement est le FCID de l'autre dispositif de réseau, et un FCID destinataire du paquet de notification d'encombrement est le FCID du dispositif source d'encombrement.

15. Dispositif de réseau selon la revendication 13, dans lequel : le premier dispositif de réseau et le second dispositif de réseau sont des dispositifs de réseau de couche 2 exécutant le protocole TRILL, Transparent Interconnection of Lots of Link ; le paquet de données est un paquet de données TRILL ; et l'adresse réseau du dispositif source d'encombrement comprend au moins l'une d'une adresse IP source interne incluse dans le paquet de données TRILL et d'une adresse MAC source interne incluse dans le paquet de données TRILL.
